(19) Europäisches Patentamt

European Patent Office

Office européen des brevets

(11) **EP 0 499 952 B1**

(12) **EUROPÄISCHE PATENTSCHRIFT**

(45) Veröffentlichungstag und Bekanntmachung des Hinweises auf die Patenterteilung:
**24.07.1996 Patentblatt 1996/30**

(51) Int Cl.$^6$: **G01S 13/34**

(21) Anmeldenummer: **92102293.5**

(22) Anmeldetag: **12.02.1992**

(54) **FMCW-Radarsystem mit linearer Frequenzmodulation**

FMCW radar system with linear frequency modulation

Système radar FMCW à modulation de fréquence linéaire

(84) Benannte Vertragsstaaten:
**DE FR GB**

(30) Priorität: **16.02.1991 DE 4104792**

(43) Veröffentlichungstag der Anmeldung:
**26.08.1992 Patentblatt 1992/35**

(73) Patentinhaber: **ROBERT BOSCH GMBH**
**70442 Stuttgart (DE)**

(72) Erfinder:
• **Winner, Hermann, Dr. Dipl.-Phys.**
**W-7500 Karlsruhe 41 (DE)**
• **Grein, Nicolas, Dipl.-Ing.**
**W-7500 Karlsruhe 1 (DE)**

(56) Entgegenhaltungen:
GB-A- 2 055 001          US-A- 4 499 435
US-A- 4 539 565          US-A- 4 593 287
US-A- 4 647 873

• INTERNATIONAL RADAR CONFERENCE LONDON 19-21. Oktober 1987, Seiten 525-529; M. LANGE et al.: "A Millimeter-Wave Low-Range Radar Altimeter for Helicopter Applications-Experimental Results"

**Beschreibung**

Stand der Technik

Die Erfindung geht aus von einem Radarsysem mit einem Millimeterwellen-Oszillator nach der Gattung des Hauptanspruchs. Es ist schon bekannt, bei einem FMCW-Radarsystem (frequenzmoduliertes Dauerstrich-Radar) die rampenförmig modulierte Sendefrequenz zu linearisieren, d. h., daß die Frequenzänderung für die Dauer einer Rampe pro Zeiteinheit konstant ist. Dabei wird die Oszillatorfrequenz gemessen und in einer geschlossenen Regelschleife in einem Regelkreis einem Regler zugeführt. Der Regler bildet in Abhängigkeit von einem Soll-Istwert-Vergleich eine Stellgröße, die dem Oszillator zugeführt wird und dessen Frequenz entsprechend nachführt. Es hat sich herausgestellt, daß die verwendeten Abstimmelemente, beispielsweise Varaktor-Dioden wegen ihrer nichtlinearen Kennlinien nur ungenügende Ergebnisse liefern. Hinzu kommt, daß äußere Einflüsse wie Temperatur oder Alterung die Kennlinie der Abstimmelemente verändern. Um dennoch befriedigende Ergebnisse für die Linearität zu erhalten, sind sehr aufwendige Maßnahmen erforderlich, die relativ hohe Kosten verursachen. Weiterhin ist ungünstig, daß Regelkreise im allgemeinen sehr schwinganfällig sind und dann eine einwandfreie Funktion des Radarsystems nicht gewährleistet ist.

Es ist weiter bekannt, die Frequenzlinien des Oszillators vor dem eigentlichen Einsatz des Radarsystems in Abhängigkeit von der Temperatur zu vermessen und daraus Korrekturwerte zu ermitteln, die abgespeichert werden. Diese Werte werden dann zur Korrektur der gemessenen Kennlinie der Oszillatorfrequenz herangezogen. Zur Durchführung dieses Verfahrens ist es jedoch erforderlich, einen zusätzlichen Temperaturfühler zu verwenden, mit dessen Hilfe temperaturabhängige Korrekturwerte ermittelt werden können. Dieses Verfahren ist sehr aufwendig, da die Kennlinien für jeden individuellen Oszillator bestimmt werden müssen. Das Problem der Schwingneigung der Regelschleife läßt sich jedoch mit diesem Verfahren nicht beeinflussen.

Aus der US 4,593,287 ist ein FMCW-Radarsystem bekannt, bei dem eine Radareinheit von einem spannungsgesteuerten Millimeterwellen-Oszillator (gunn diode oszillator) zur Erzeugung einer rampenförmig modulierten Oszillatorfrequenz gesteuert wird. Dabei wird die Oszillatorfrequenz in Abhängigkeit eines angepeilten Objekts derart geändert, daß die Amplitude des Meßsignals immer an der gleichen Stelle im Frequenzdiagramm erscheint. Das hat zur Folge, daß zu einem bestimmten Zeitpunkt nur ein Objekt erkannt werden kann. Erscheinen mehrere Objekte gleichzeitig, dann entstehen Verschiebungen bzw. Änderungen der Steigung und des Phasenwinkels, die zu einer Fehlmessung führen können.

Aus der Veröffentlichung "International Radar Conference, London, 1987, Seiten 525 bis 529 ist ein Millimeterwellenradar bekannt, das als Höhenmesser für Hubschrauber-Anwendungen verwendbar ist. Zur Steuerung einer Notlandung bei Maschinenausfall muß dabei die Höhe sehr exakt erfaßt werden. Dabei wird ebenfalls nur die Höhe zum Landeplatz, also nur ein Objekt erfaßt.

Vorteile der Erfindung

Das erfindungsgemäße Radarsystem mit den kennzeichnenden Merkmalen des Hauptanspruchs hat demgegenüber den Vorteil, daß zur Linearisierung der Oszillatorfrequenz kein Regelkreis erforderlich ist und dadurch das Radarsystem nicht zur Schwingung neigt. Besonders vorteilhaft ist, daß durch die vorgegebene Bewertung der ermittelten Differenzen das Radarsystem unempfindlich ist gegen Parameterschwankungen des verwendeten Osziallators. Ein weiterer Vorteil ist auch darin zu sehen, daß Temperatur- oder Alterungseinflüsse selbständig ausgeglichen werden. Ein Nacheichen ist daher nicht erforderlich.

Durch die in den Unteransprüchen aufgeführten Maßnahmen sind vorteilhafte Weiterbildungen und Verbesserungen des im Hauptanspruch angegebenen Radarsystems möglich. Besonders vorteilhaft ist, daß die Linearität der modulierten Oszillatorfrequenz mittels der Hilbert-Transformation auf einfache Weise überprüfbar ist. Die Hilbert-Transformation stellt ein Rechenverfahren dar, mit dem eine Funktion im Zeitbereich in eine analytische Funktion transformiert werden kann. Mit der analytischen Funktion kann dann durch Ableitung der Phase die Momentanfrequenz des Signals berechnet werden.

Besonders vorteilhaft ist, wenn zur Berechnung der Linearität der modulierten Oszillatorfrequenz wenigstens ein Meßzyklus verwendet wird. Dadurch erhält man ein erstes Ergebnis innerhalb kürzester Zeit.

Da im allgemeinen die Linearität der modulierten Oszillatorfrequenz sich nicht ständig ändert, sondern beispielsweise im wesentlichen während der Aufwärmphase, genügt die Bestimmung der Linearität der modulierten Oszillatorfrequenz als Stichprobe. Dadurch wird in vorteilhafter Weise Rechenzeit gespart.

Treten mehrere Reflexionsobjekte auf, dann ist in vorteilhafter Weise das zugehörige Teilspektrum mittels einer Fensterfunktion isolierbar und daraus die Linearität bestimmbar. Durch die Isolierung der Teilspektren ergeben sich eindeutige Werte für die Linearität bzw. deren Abweichung.

Um den Einfluß von Störimpulsen oder Fehlmessungen zu reduzieren, ist besonders günstig, Linearitätsabweichungen der Reflexionsspektren durch Mittelwertbildung zu bestimmen.

Ein weiterer Vorteil ist auch darin zu sehen, daß die Sollwerte für die Linearität der modulierten Oszillatorfrequenz in einer Wertetabelle gespeichert sind. Der Zugriff auf eine Wertetabelle ist im allgemeinen sehr schnell, so daß die modulierte Oszillatorfrequenz mit einer hohen Abtastrate gemessen werden kann. Dadurch reduzieren sich die Fehler in günstiger Weise.

Weitere Vorteile der Erfindung sind der Beschreibung entnehmbar.

Zeichnung

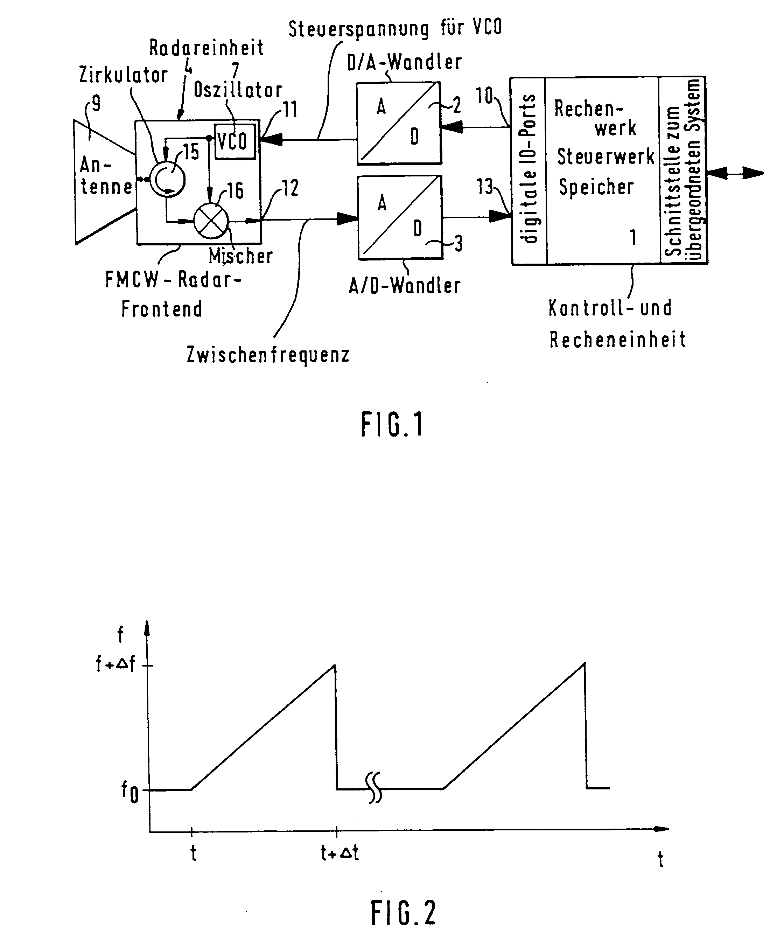

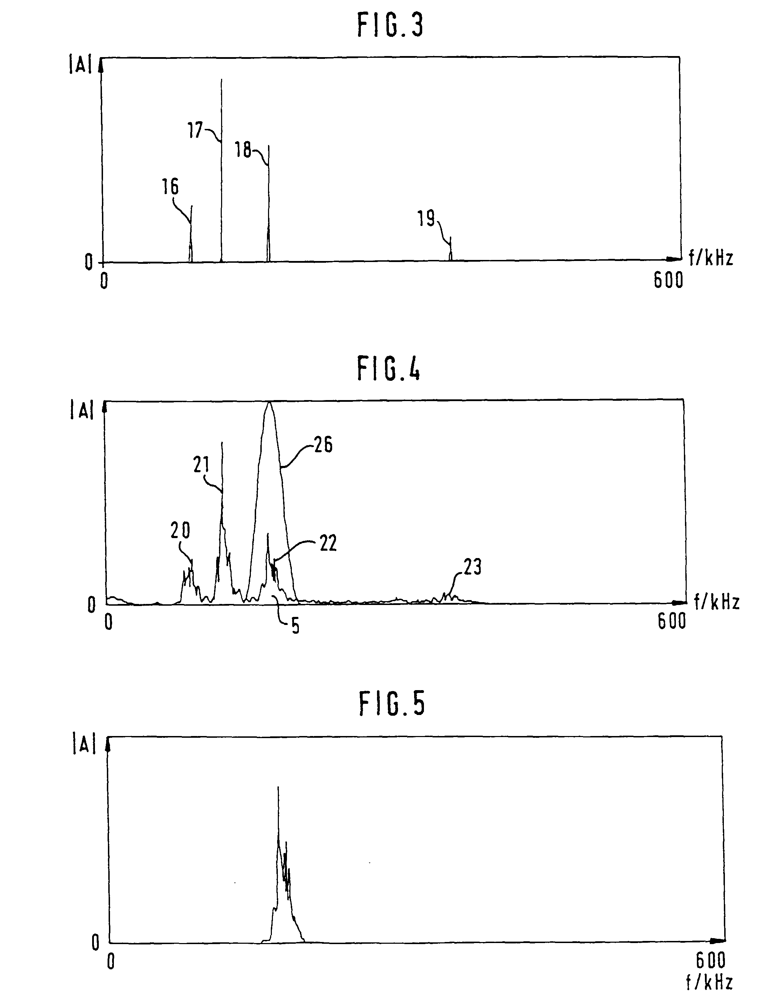

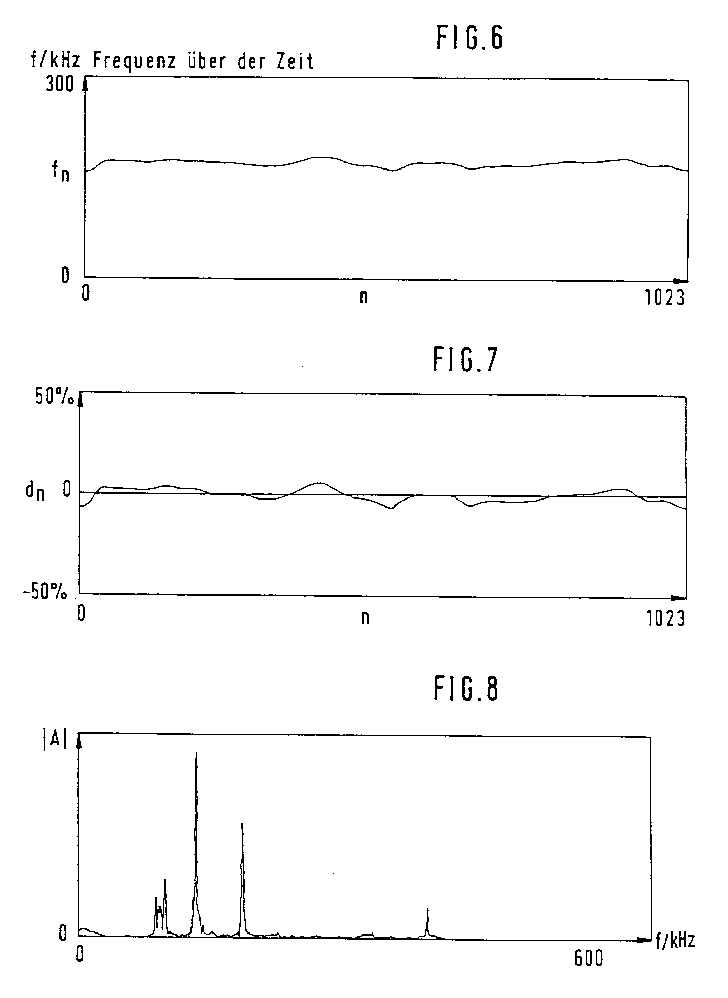

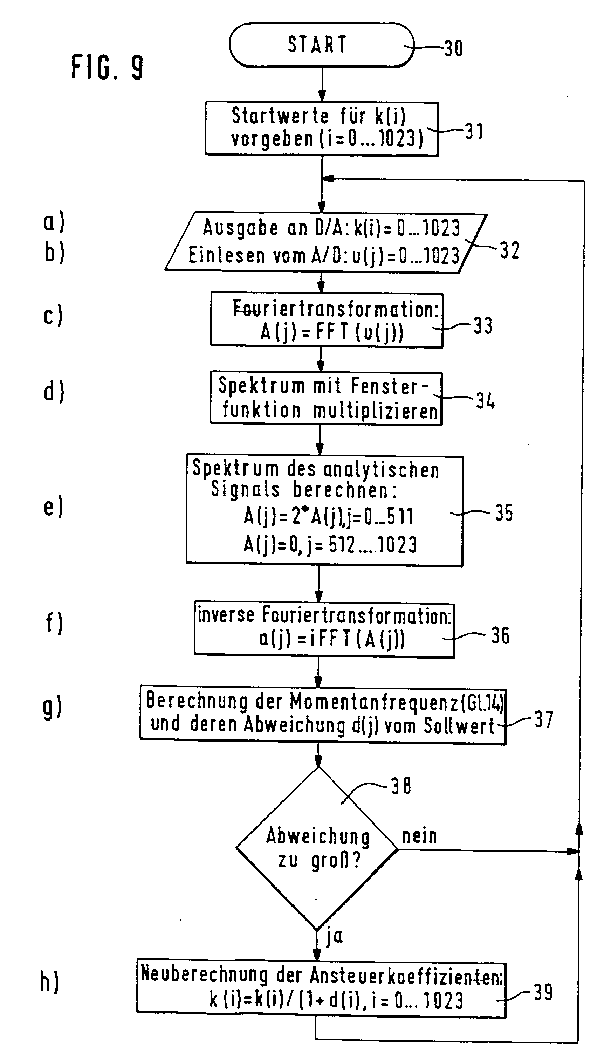

Ein Ausführungsbeispiel der Erfindung ist in der Zeichnung dargestellt und in der nachfolgenden Beschreibung näher erläutert. Es zeigen Figur 1 ein Blockschaltbild des Ausführungsbeispiels, Figur 2 ein Diagramm mit dem zeitlichen Verlauf der Sendefrequenz einer modulierten Oszillatorfrequenz, Figur 3 ein Diagramm eines idealisierten Spektrums ohne Linearitätsfehler, Figur 4 ein Diagramm mit Reflexionsspektren und einer Fensterhüllkurve, Figur 5 eine Detaildarstellung aus Figur 4, Figur 6 zeigt ein Diagramm mit dem berechneten Verlauf der Momentanfrequenz, Figur 7 Abweichungen der Momentanfrequenz vom Mittelwert, Figur 8 ein Diagramm mit dem Spektrum einer korrigierten Oszillatorfrequenz und Figur 9 zeigt ein Flußdiagramm.

Beschreibung des Ausführungsbeispiels

In Figur 1 ist das Blockschaltbild eines FMCW-Radarsystems dargestellt. Eine Radareinrichtung 4 weist einen spannungsgesteuerten Oszillator 7 (VCO) auf. Der Oszillator 7 gibt ein rampenförmig moduliertes Signal gemäß der Figur 2 mit der modulieren Oszillatorfrequenz auf einen Zirkulator 15, der mit einer Antenne 9 verbunden ist. Das Signal wird von der Antenne 9 abgestrahlt. Die Antenne 9 empfängt die an einem Hindernis reflektierte Strahlung, die über den Zirkulator 15 an einen Mischer 16 weitergeführt wird. Ein Teil der Oszillatorenergie wird ebenfalls vom Oszillator 7 ausgekoppelt und dem Mischer 16 zugeführt. Im Mischer wird dann die Sendefrequenz auf einen niedrigeren Wert, die Zwischenfrequenz, herabgemischt. Das herabgemischte Signal steht als Spannungssignal am Ausgang 12 zur Verfügung. Der Ausgang 12 ist mit dem Eingang eines Analog-Digitalwandlers 2 verbunden. Der Analog-Digitalwandler quantisiert das Signal und gibt es an einen Eingang der Kontroll- und Recheneinheit 1. Die Kontroll- und Recheneinheit 1 weist einen Mikrocomputer, ein Eingabe- und Ausgabeport, einen Speicher sowie ein Steuerprogramm auf entsprechend der Figur 9. Das Mikrocomputersystem ist per se bekannt und muß daher nicht näher beschrieben werden. Die Kontroll- und Recheneinheit weist desweiteren eine Schnittstelle auf, an die ein übergeordnetes System anschließbar ist.

Ein Ausgang 10 der Kontroll- und Recheneinheit 1 ist mit dem Eingang eines Digital-Analogwandlers 2 verbunden, der die digitalisierten Werte in analoge Werte wandelt. Der analoge Ausgang ist mit einem Eingang 11 der Radareinrichtung 4 verbunden. Das Ausgangssignal des Analog-Digitalwandlers 2 wirkt auf den Steuereingang des Oszillators (VCO) 7.

Sowohl der Analog- Digitalwandler 3 als auch der Digital-Analogwandler 2 sind bekannte Baugruppen, die nicht näher beschrieben werden müssen. Die Radareinheit 4 ist per se ebenfalls bekannt.

Im folgenden wir die Funktionsweise des Ausführungsbeispiels beschrieben.

Bei einem frequenzmodulierten FMCW-Radarsystem (frequenzmoduliertes Dauerstrich-Radar) ist aus Gründen der Meßgenauigkeit erforderlich, daß die rampenförmig modulierte Sendefrequenz (Figur 2) linear geändert wird, d. h. für die Dauer einer Rampe ist die Frequenzänderung pro Zeiteinheit konstant (df/dt = k = konstant).

In Figur 2 ist eine typische rampenförmig modulierte Oszillatorfrequenz dargestellt. Wird ein derartiges Signal von einem Objekt im Abstand d reflektiert und nach einer Laufzeit $T_d = d/2c$ mit c als Lichtgeschwindigkeit wieder empfangen und mit dem Sendesignal gemischt, dann erhält man als Mischprodukt eine Frequenz

$$f = k * T_d = k * d/2c$$

$T_d$ Laufzeit, k Frequenzänderung

pro Zeiteinheit

c Lichtgeschwindigkeit

die dem Abstand d proportional ist. Das Ausgangssignal einer solchen Radareinheit enthält also für jedes erfaßte Reflexionsobjekt Frequenzanteile, aus denen der jeweilige Abstand berechnet werden kann. Bei dieser Betrachtung werden allerdings Frequenzverschiebungen aufgrund des Doppler-Effekts vernachlässigt. Wegen einer im allgemeinen geforderten großen Genauigkeit für die Abstandsbestimmung als auch zur Unterscheidung von mehreren benachbarten Objekten ist eine lineare Modulation der Oszillatorfrequenz erforderlich.

Das von der Radareinheit 4 empfangene und von wenigstens einem Objekt reflektierte Signal wird einem Analog-Digitalwandler 3 zugeführt und von diesem digitalisiert. Das digitalisierte Signal gelangt über einen Eingang 13 in die Kontroll- und Recheneinheit 1. Die Kontroll- und Recheneinheit 1 bestimmt nun mit der Hilbert-Transformation die Abweichung der gemessenen modulierten Oszillatorfrequenz von einem linearisierten Sollwert und kann bei Bedarf diese Abweichungen zwischenspeichern. Entsprechend der Abweichung von den Sollwerten für die Linearität wird ein Signal generiert, das über ein Ausgang 10 auf einen Digital-Analogwandler 2 zugeführt wird. Dieses Signal wird als Analogsignal dem steuerbaren Oszillator 7 zugeführt, der die Oszillatorfrequenz entsprechend den vorgegebenen Sollwerten ändert, so daß nun ein linear moduliertes Oszillatorsignal über die Antenne 9 abgestrahlt werden kann. Die Sollwerte zur Korrektur der Linearität der Oszillatorfrequenz sind in einem Speicher der Kontroll- und Recheneinheit 1 abgelegt, so daß die Sollwerte in Form einer Wertetabelle verfügbar sind.

In weiter Ausgestaltung der Erfindung ist vorgesehen, die Sollwerte für den Frequenzanstieg durch eine Geradengleichung vorzugeben.

Besonders vorteilhaft ist die Bestimmung der Abweichung von der Linearität der modulierten Oszillatorfrequenz mit Hilfe der per se bekannten Hilbert-Transformation [1], die im folgenden kurz beschrieben wird.

Die Hilbert-Transformierte eines reellen Zeitsignals a(t) ist durch folgende Gleichung definiert:

$$H[a(t)] = \tilde{a}(t) = \frac{1}{\pi} \cdot \int_{-\infty}^{\infty} a(\tau) \frac{1}{t-\tau} d\tau \qquad (1)$$

mit ã(t) als Hilbert-Transformierte.

Die Transformation wandelt das Zeitsignal a(t) in ein anderes Zeitsignal ã(t). Gleichung 1 entspricht einer Faltung im Zeitbereich. Unter Benutzung des Faltungstheorems

$$a(t)*b(t) = \int_{-\infty}^{\infty} a(\tau) b(t-\tau) d\tau \qquad (2)$$

$$a(t)*b(t) \xrightarrow{F} A(f) \cdot B(f) \qquad (3)$$

$$a(t) \cdot b(t) \xrightarrow{F} A(f)*B(f) \qquad (4)$$

wobei * den Faltungsoperator und F die Fourier Transformation bedeuten, kann man die Gleichung (1) auch folgendermaßen darstellen:

$$H[a(t)] = \tilde{a}(t) = \frac{1}{\pi} a(t) * \frac{1}{t} \qquad (5)$$

Mit der Korrespondenz

$$F\left[\frac{-1}{i \pi \cdot t}\right] = \operatorname{sgn} f \qquad (6)$$

erhält man für die Fouriertransformierte von H[a(t)]

$$F[\tilde{a}(t)] \equiv A_\perp(f) = A(f) \cdot (-i \cdot \operatorname{sgn} f) \qquad (7)$$

Die Hilbert-Transformation einer Zeitfunktion a(t) läßt sich also durchführen, indem man a(t) nach Fourier transformiert, das Spektrum mit i mal sign(f) multipliziert und das Ergebnis wieder in den Zeitbereich zurücktransformiert.

Mit Hilfe der Hilbert-Transformation läßt sich aus einem Zeitsignal a(t) ein sogenanntes analytisches Signal generieren, welches folgendermaßen definiert ist:

$$\overset{\triangledown}{a}(t) = a(t) + i \cdot \tilde{a}(t) \qquad (8)$$

Da dieses ein komplexes Signal ist, kann man es auch in die Polardarstellung mit der Phase $\phi(t)$ und dem Betrag $|\overset{\triangledown}{a}(t)|$ überführen:

$$\overset{\triangledown}{a}(t) = |\overset{\triangledown}{a}(t)| \, e^{i \phi(t)} \qquad (9)$$

mit

$$\left| \overset{\curlyvee}{a}(t) \right| = \sqrt{a(t)^2 + \tilde{a}(t)^2} \qquad\qquad (10)$$

und

$$\phi(t) = \arctan\left[\frac{\tilde{a}(t)}{a(t)}\right] \qquad\qquad (11)$$

Der besondere Vorteil des analytischen Signal $\overset{\curlyvee}{a}$ (t) gegenüber dem ursprünglichen, rein reellen Zeitsignals a(t) für das vorliegende Verfahren ist die Möglichkeit, durch Ableitung der Phase die Momentanfrequenz des Signals zu berechnen:

$$f(t) = \frac{1}{2\pi} \cdot \frac{d}{dt} \phi(t) \qquad\qquad (12)$$

Schließlich läßt sich mit den Gleichungen 7 und 9 und den allgemeinen Rechenregeln der Fouriertransformation die Fouriertransformierte des analytischen Signals schreiben als

$$\overset{\curlyvee}{A}(f) = A(f) + iA_{\perp}(f) = A(f)(1 + \text{sgn } f) = \begin{cases} 0, & \text{für } f<0 \\ A(f), & \text{für } f=0 \quad (13) \\ 2A(f), & \text{für } f>0 \end{cases}$$

Die hier für die Transformation kontinuierlicher Zeitsignale dargestellten Grundlagen lassen sich ohne inhaltliche Änderung auch auf die diskrete Transformation von Zahlenfolgen aus abgetasteten Signalen übertragen. Für die dabei relevanten Verfahren und Randbedingungen sei auf die Literatur verwiesen, in der diese Thematik ausführlich behandelt wird (z. B. [2].

Auf der Basis dieser Grundlagen läßt sich das Verfahren zur Linearisierung der Frequenzmodulation folgendermaßen beschreiben:

Ausgangspunkt für einen Meßzyklus ist ein Satz von m Zahlenwerten k(i), i=0...m-1, durch die die Ansteuerfunktion für den Oszillator der Radareinheit beschrieben ist. Die Kontrolleinheit schickt diese Werte an den D/A-Wandler und steuert so die Modulation der Sendefrequenz. Die Werte k(i) sind Schätzwerte für die ideale Ansteuerfunktion, welche zu einer frequenzlinearen Modulation der Sendefrequenz (Oszillatorfrequenz) führen würde. Ziel der folgenden Schritte ist die Berechnung eines neuen Satzes von Werten k(i), der dieser idealen Ansteuerfunktion möglichst nahekommt.

a) Aus den Werten k(i) erzeugt die Kontrolleinheit mit Hilfe des D/A-Wandlers die Ansteuerfunktion für die Radareinheit.

b) Gleichzeitig mit dem Schritt a) wird das Spannungssignal, welches die Radareinheit zurückliefert, abgetastet, vom A/D-Wandler quantisiert und in der Recheneinheit gespeichert. Man erhält einen Satz von n Abtastwerten a(j).

c) Mit den Abtastwerten aus b) wird ein FFT (fast fourier transform) durchgeführt. Man erhält ein Spektrum, bestehend aus n komplexen Zahlen, die die Frequenz- und Phaseninformation des Signals erhalten. Figur 3 zeigt vier idealisierte Teile 16 bis 19 von Amplitudenspektren beim Vorhandensein von vier Reflektoren bei völlig linearer Modulation. Jedes Reflexionsobjekt wird repäsentiert durch eine schmale Amplitudenspitze bei einer Frequenz, die vom Abstand des Reflexionsobjektes abhängt. Bei nichtidealer Modulation jedoch sind die Frequenzen, die im Signal der Radareinheit enthalten sind, nicht zeitlich konstant, so daß sie zu mehreren Frequenzlinien des Spektrums einen Anteil liefern. Dies führt zu einer Verbreiterung der erwarteten Amplitudenspitzen, wie sie für die vier Teilspektren 20 bis 23 in Figur 4 dargestellt sind.

d) Das Teilspektrum 22 (Figur 4) wird von einer Fensterfunktion 26 derart umhüllt, daß die Frequenzlinien genau eines Reflexionsobjekts bei der Multiplikation der Fensterfunktion mit dem gesamten Spektrum erhalten bleiben, die Frequenzlinien anderer Reflexionsobjekte und Störungen jedoch unterdrückt werden. Als Fensterfunktion eignen sich z. B. Hanning- oder Hammingfenster [2].

Figur 5 zeigt das Ergebnis von Schritt d), angewandt auf das Gesamtspektrum.

e) Gemäß Gleichung (13) werden die Werte des Spektrums für negative Frequenzen Null gesetzt, die Werte positiver Frequenzen mit dem Faktor zwei multipliziert. Man erhält so die Fouriertransformierte des analytischen Signals.

5

f) Mit dem modifizierten Spektrum aus e) wird eine inverse FFT durchgeführt. Ergebnis ist ein analytisches Zeitsignal entsprechend Gleichung (8) in Form von n komplexen Abtastwerten a(j).

g) Analog zu den Gleichungen (11) und (12) wird die Momentanfrequenz des analytischen Signals bestimmt nach der Formel:

$$f(j) = \frac{\phi(j) - \phi(j-1)}{2\pi T} \qquad (14)$$

wobei T die Abtastperiode ist. Wegen der $2\pi$-Periodizität der Phasenfunktion $\phi$ muß man im Falle eines Phasensprungs zwischen $\phi(j-1)$ und $\phi(j)$, was nach Gleichung (14) zu einer negativen Frequenz führen würde, zur Korrektur $2\pi$ zum Zähler addieren. Normiert man die Ergebnisse durch eine Division aller f(j) durch Mittelwert aller f(j) und subtrahiert eins, so erhält man die relative Abweichung d(j) der Momentanfrequenz von ihrem Mittelwert (Figur 7).

h) Die Koeffizienten k(i) der Steuerfunktion können nun so modifiziert werden, daß den Abweichungen d(j) entgegengewirkt wird. Die Rechenvorschrift hierfür hängt unter anderem ab von der Charakteristik des D/A-Wandlers und dem Verhältnis der Taktraten vom D/A- und A/D-Wandler. Für den Fall, daß beide Taktraten gleich sind und der D/A-Wandler Integrator-Charakteristik besitzt, d. h. sein Ausgangssignal mit jedem neuen k(i) um einen Wert u(i)~k(i) erhöht bzw. erniedrigt, sei eine mögliche Rechenvorschrift exemplarisch angegeben:

$$kneu(i) = k(i) / (1 + d(i)), \quad i = . .n-1$$

Die neuen Ansteuerkoeffizienten kneu(i) werden im nächsten Zyklus in Schritt a) als k(i) weiterverwendet.

Die Schritte a) bis c) werden in der Regel gemäß der eigentlichen Aufgabe des Radar-Systems dauernd zyklisch durchgeführt. Mit den Schritten d) bis g) kann entweder mit gleicher Häufigkeit wie a) bis c) oder auch nur stichprobenartig die Qualität der Ansteuerfunktion bezüglich der Linearität überprüft werden. Übersteigt die in Schritt g) berechnete Abweichung von der Linearität einen vorgegebenen Maximalwert, so kann mit Schritt h) eine Korrektur der Koeffizienten der Ansteuerfunktion vorgenommen werden.

Beispiele der Frequenzlinearität sind in Figur 6 und 7 dargestellt.

In weiterer Ausgestaltung der Erfindung sind folgende vorteilhafte Schritte vorgesehen:

- Werden bei einer Messung mehrere Reflexionsobjekte erfaßt, so können die zugehörigen Teilspektren, sofern sie sich nicht überlappen, einzeln mit einer Fensterfunktion gemäß Schritt d) isoliert und getrennt nach den Schritten e) bis g) weiterverarbeitet werden. Man erhält dementsprechend mehrere Ergebenisse für die Linearitätsabweichung, die gemittelt werden können, um statistische Meßunsicherheiten zu verringern.

- Ebenfalls um statistische Meßunsicherheiten zu verringern, können zwischen Schritt g) und h) Mittelwerte aus beliebig vielen vorhergehenden Messungen und Berechnungen durchgeführt werden.

In Figur 9 ist ein Flußdiagramm dargestellt, das zur Steuerung der Kontroll- und Recheneinheit 1 entsprechend der Schritte a) bis h) verwendbar ist. Nach dem Start in Position 30 werden in Position 31 Startwerte für k(i) vorgegeben, wobei i die Werte 0 bis 1023 annimmt. Entsprechend den Schritten a) und b) werden in Position 32 die Werte k(i) für i = 0 bis 1023 an den Digital-Analogwandler 2 ausgegeben. Desweiteren werden vom Analog-Digitalwandler 4 die Werte u(j) für j = 0 bis 1023 eingelesen. In Position 33 wird die Fourier Transformation A(j) = FFT(u(j)) für den Schritt c) durchgeführt. Entsprechend der Figur 4 wird in Position 34 das Teilspektrum 22 durch Multiplikation mit der Fensterfunktion 26 isoliert (Schritt d)). In Position 35 wird entsprechend dem Schritt e) das Spektrum des analytischen Signals berechnet:

$$A(j) = 2* A(j), \quad j = 0 \text{ bis } 511 \text{ und } A(j) = 0, \quad j = 512 \text{ bis } 1023$$

In Position 36 wird entsprechend dem Schritt f) die inverse Fourier Transformation A(j) = iFFT(A(j)) gebildet.

In Position 37 wird (Schritt g) die Momentanfrequenz nach der Gleichung (14) berechnet und deren Abweichung d(j) vom Sollwert ermittelt.

In Position 38 wird abgefragt, ob die Abweichung d(j) vom Sollwert zu groß ist. Ist das nicht der Fall, dann beginnt das Programm wieder in Position 32. Ist die Aweichung dagegen zu groß, dann erfolgt in Position 39 entsprechend Schritt h eine Neuberechnung der Ansteuerkoeffizienten:

$$k(i) = k(i)/(1 + d(i)), \quad i = 0 \text{ bis } 1023$$

Danach startet das Programm wieder in Position 32.

Literatur:

[1] N. Thrane, The Hilbert Transform Technical Review 3/1984, Bruel & Kjaer

[2] Stearns, Digitale Verarbeitung analoger Signale

**Patentansprüche**

1. FMCW-Radarsystem mit einer Radareinheit (4), die einen spannungsgesteuerten Millimeterwellen-Oszillator (7) zur Erzeugung einer rampenförmig modulierten Oszillatorfrequenz als Ausgangssignal aufweist, und mit einer Steuereinheit, dadurch gekennzeichnet,

   a) daß die Steuereinheit eine Kontroll- und Recheneinheit (1) aufweist, der über einen Analog-/Digitalwandler (3) wenigstens ein Teil des herabgemischten Empfangssignals (12) der Radareinheit (4) zuführbar ist,

   b) daß die Kontroll- und Recheneinheit (1) aus dem digitalisierten Signal (13) mit einer vorgegebenen Funktion die Momentanfrequenz der modulierten Oszillatorfrequenz berechnet und mit vorgegebenen Sollwerten vergleicht, um die Linearität der modulierten Oszillatorfrequenz zu überprüfen,

   c) und daß bei Abweichung von den Sollwerten ein Steuersignal bildbar ist, das der Radareinheit (4) über einen Digital-/Analogwandler (2) zuführbar ist und das die Abweichung von der Linearität der modulierten Oszillatorfrequenz in der Weise kompensiert, daß die Frequenzänderung pro Zeiteinheit konstant ist.

2. Radarsystem nach Anspruch 1, dadurch gekennzeichnet, daß die Linearität der modulierten Oszillatorfrequenz mittels der Hilbert-Transformation überprüfbar ist.

3. Radarsystem nach einem der vorhergehenden Ansprüche, dadurch gekennzeichnet, daß für wenigstens einen Meßzyklus die Linearität der modulierten Oszillatorfrequenz überprüfbar ist.

4. Radarsystem nach einem der Ansprüche 1 oder 2, dadurch gekennzeichnet, daß die Linearität der modulierten Oszillatorfrequenz stichprobenartig überprüfbar ist.

5. Radarsystem nach einem der vorhergehenden Ansprüche, dadurch gekennzeichnet, daß beim Auftreten mehrerer Reflexionsobjekte die zugehörigen Teilspektren mit Hilfe einer vorgegebenen Fensterfunktion isolierbar und die Linearität für jedes Teilspektrum bestimmbar ist.

6. Radarsystem nach einem der vorhergehenden Ansprüche, dadurch gekennzeichnet, daß die Linearitätsabweichungen der Reflexionsspektren durch Mittelwertbildung bestimmbar sind.

7. Radarsystem nach einem der vorhergehenden Ansprüche, dadurch gekennzeichnet, daß die Sollwerte für die Linearität der modulierten Oszillatorfrequenz in einer Wertetabelle gespeichert sind.

**Claims**

1. FMCW radar system with a radar unit (4), which has a voltage-controlled millimetre wavelength oscillator (7) for generating an oscillator frequency, modulated in the shape of a ramp, as output signal, and with a control unit, characterized

   a) in that the control unit has a checking and computing unit (1) which can be fed at least a portion of the downconverted received signal (12) of the radar unit (4) via an analog-to-digital converter (3),
   b) in that the checking and computing unit (1) calculates from the digitized signal (13) by means of a prescribed function the instantaneous frequency of the modulated oscillator frequency and compares it with prescribed desired values, in order to check the linearity of the modulated oscillator frequency, and
   c) in that in the case of deviation from the desired values a control signal can be formed which can be fed to the radar unit (4) via a digital-to-analog converter (2) and which compensates the deviation from linearity of the modulated oscillator frequency in such a way that the frequency change is constant per time unit.

2. Radar system according to Claim 1, characterized in that the linearity of the modulated oscillator frequency can be checked by means of the Hilbert transformation.

3. Radar system according to one of the preceding claims, characterized in that the linearity of the modulated oscillator frequency can be checked for at least one measuring cycle.

4. Radar system according to one of Claims 1 and 2, characterized in that the linearity of the modulated oscillator frequency can be checked by random sampling.

5. Radar system according to one of the preceding claims, characterized in that upon the occurrence of a plurality of reflecting objects, the associated partial spectra can be isolated with the aid of a prescribed window function and the linearity can be determined for each partial spectrum.

6. Radar system according to one of the preceding claims, characterized in that the linearity deviations of the reflectance spectra can be determined by averaging.

7. Radar system according to one of the preceding claims, characterized in that the desired values for the linearity of the modulated oscillator frequency are stored in a table of values.

## Revendications

1. Système radar FMCW comprenant une installation de radar (4) équipée d'un oscillateur d'ondes millimétriques (7) commandé en tension pour générer une fréquence d'oscillation modulée en forme de rampe comme signal de sortie ainsi qu'une unité de commande, caractérisé en ce que :

   a) l'unité de commande comporte une unité de commande et de calcul (1) qui reçoit par un convertisseur analogique/numérique (3) au moins une partie du signal de réception (12) mélangé dans le sens d'une réduction, provenant de l'installation radar (4),
   b) l'unité de commande et de calcul (1), partant du signal numérisé (13), calcule avec une fonction prédéterminée, la fréquence instantanée de la fréquence d'oscillation modulée et la compare à des valeurs de consigne prédéterminées pour vérifier la linéarité de la fréquence d'oscillation modulée,
   c) et en cas de déviation par rapport aux valeurs de consigne on forme un signal de commande appliqué au radar (4) par un convertisseur numérique/analogique (2) qui compense la déviation de linéarité de la fréquence d'oscillation modulée de façon que la variation de fréquence reste constante par unité de temps.

2. Système radar selon la revendication 1, caractérisé en ce que la linéarité de la fréquence d'oscillation modulée est vérifiée à l'aide d'une transformation de Hilbert.

3. Système radar selon l'une des revendications précédentes, caractérisé en ce que pour au moins un cycle de mesure, on contrôle la linéarité de la fréquence d'oscillation modulée.

4. Système radar selon l'une des revendications 1 ou 2, caractérisé en ce qu'on vérifie la linéarité de la fréquence d'oscillation modulée en procédant par des sondages.

5. Système radar selon l'une des revendications précédentes, caractérisé en ce qu'en présence de plusieurs objets réfléchissants, on isole les spectres partiels correspondant à l'aide d'une fonction de fenêtre prédéterminée et on détermine la linéarité pour chaque spectre partiel.

6. Système radar selon l'une des revendications précédentes, caractérisé en ce qu'on définit les déviations de linéarité des spectres de réflexion en formant une valeur moyenne.

7. Système radar selon l'une des revendications précédentes, caractérisé en ce que les valeurs de consigne de la linéarité de la fréquence d'oscillation modulée sont enregistrées dans un tableau de valeurs.

Steuerspannung für VCO

Radareinheit

Zirkulator    4    Oszillator    D/A-Wandler

9    7    11    A    2    10

Antenne    15    VCO    D

16    12    A    13    D    3

Mischer

FMCW-Radar-
Frontend    A/D-Wandler

Zwischenfrequenz

digitale IO-Ports

Rechenwerk
Steuerwerk
Speicher    1

Schnittstelle zum übergeordneten System

Kontroll- und
Recheneinheit

## FIG.1

f

f+Δf

f₀

t    t+Δt    t

## FIG.2

## FIG.3

## FIG.4

## FIG.5

## FIG.6

f/kHz Frequenz über der Zeit

## FIG.7

## FIG.8

FIG. 9

START — 30

Startwerte für k(i)
vorgeben (i = 0...1023) — 31

a)
b)
Ausgabe an D/A: k(i) = 0...1023
Einlesen vom A/D: u(j) = 0...1023 — 32

c)
Fouriertransformation:
A(j) = FFT (u(j)) — 33

d)
Spektrum mit Fensterfunktion multiplizieren — 34

e)
Spektrum des analytischen
Signals berechnen:
$A(j) = 2 \cdot A(j), j = 0...511$
$A(j) = 0, j = 512....1023$ — 35

f)
inverse Fouriertransformation:
a(j) = iFFT (A(j)) — 36

g)
Berechnung der Momentanfrequenz (Gl.14)
und deren Abweichung d(j) vom Sollwert — 37

38

Abweichung
zu groß?    nein

ja

h)
Neuberechnung der Ansteuerkoeffizienten:
$k(i) = k(i) / (1 + d(i)), i = 0...1023$ — 39